(19) Europäisches Patentamt
European Patent Office
Office européen des brevets

(11) **EP 4 322 244 A1**

(12) **EUROPEAN PATENT APPLICATION**
published in accordance with Art. 153(4) EPC

(43) Date of publication:
**14.02.2024 Bulletin 2024/07**

(51) International Patent Classification (IPC):
**H01M 4/13** (2010.01)       **H01M 10/0566** (2010.01)

(21) Application number: **22926311.6**

(86) International application number:
**PCT/CN2022/101433**

(22) Date of filing: **27.06.2022**

(87) International publication number:
**WO 2024/000095 (04.01.2024 Gazette 2024/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Ningde, Fujian 352100 (CN)**

(72) Inventors:
• **XIAO, Dejun**
**Ningde, Fujian 352100 (CN)**

• **YU, Chunpeng**
**Ningde, Fujian 352100 (CN)**
• **CHEN, Jiahua**
**Ningde, Fujian 352100 (CN)**
• **LI, Quanguo**
**Ningde, Fujian 352100 (CN)**
• **SUN, Jingxuan**
**Ningde, Fujian 352100 (CN)**
• **LIU, Qian**
**Ningde, Fujian 352100 (CN)**

(74) Representative: **Kraus & Lederer PartGmbB**
**Thomas-Wimmer-Ring 15**
**80539 München (DE)**

(54) **NEGATIVE ELECTRODE SHEET, SECONDARY BATTERY, BATTERY MODULE, BATTERY PACK, AND ELECTRIC APPARATUS**

(57)     This application relates to a negative electrode plate, including a negative electrode current collector; and a negative electrode film layer located on at least one surface of the negative electrode current collector. The negative electrode film layer includes a middle coating region and edge coating regions located on two opposite sides of the middle coating region. Thickness of the edge coating region in a fully-discharged state is A1, thickness of the edge coating region in a fully-charged state is B1, thickness of the middle coating region in the fully-discharged state is A2, and thickness of the middle coating region in the fully-charged state is B2. A1, A2, B1, and B2 satisfy the following condition: (B1-A1)/A1>(B2-A2)/A2, and B2<B 1. This application further relates to a secondary battery including the negative electrode plate as well as a battery module, battery pack, and electric apparatus including the secondary battery.

FIG. 1

## Description

### TECHNICAL FIELD

This application pertains to the field of secondary battery technologies, and specifically, to a negative electrode plate, a secondary battery, a battery module, a battery pack, and an electric apparatus.

### BACKGROUND

Secondary batteries have been widely used in various consumer electronic products and electric vehicles due to their prominent advantages such as light weight, no pollution, and no memory effect.

Currently, to achieve high energy density of secondary batteries, negative electrode plates have been designed with large compacted density and high loading capacity. However, such a design results in a lower overall porosity of the negative electrode plate, which leads to poor electrolyte infiltration. The process of electrolyte infiltration into the electrode plate follows the basic principles of diffusion, diffusing from the edge of the negative electrode plate toward the middle. In this situation, electrolyte infiltration into the middle region of the negative electrode plate is insufficient, which causes lithium metal precipitation due to large ion diffusion impedance during formation or cycling thereof. This affects the safety performance and cycling performance of the batteries.

### SUMMARY

In view of the technical problem in the background, this application provides a negative electrode plate and is intended to enable the secondary battery containing the same to have good safety performance and cycling performance.

To achieve the foregoing objective, a first aspect of this application provides a negative electrode plate, including:

a negative electrode current collector; and
a negative electrode film layer located on at least one surface of the negative electrode current collector, where the negative electrode film layer includes a middle coating region and edge coating regions located on two opposite sides of the middle coating region, where thickness of the edge coating region in a fully-discharged state is A1, thickness of the edge coating region in a fully-charged state is B1, thickness of the middle coating region in the fully-discharged state is A2, and thickness of the middle coating region in the fully-charged state is B2, where A1, A2, B1, and B2 satisfy the following condition:

$$(B1-A1)/A1 > (B2-A2)/A2, \text{ and } B2 < B1.$$

Compared with the prior art, this application at least includes the following beneficial effects.

In this application, the middle coating region and edge coating regions with different thickness rebound rates are formed in different regions on the negative electrode current collector of the negative electrode plate, and specifically, thickness rebound rate of the edge coating region of the negative electrode film layer is greater than thickness rebound rate of the middle coating region. In addition, when the negative electrode plate is in the fully-charged state, the thickness B2 of the middle coating region is smaller than the thickness B1 of the edge coating region. In this way, in the fully-charged state, the electrolyte in the central region of the negative electrode plate is not completely extruded, and it is not difficult to absorb the electrolyte back into the middle region of the negative electrode plate after battery cell swelling. In addition, it is easy to absorb the electrolyte back into the middle due to the smaller thickness B2 of the middle coating region. Thus, the lithium precipitation problem caused by insufficient electrolyte and the lithium-ion diffusion difficulty in the middle region is solved, improving the safety performance and cycling performance of the secondary battery using the negative electrode plate.

In any embodiment of this application, B1 and B2 satisfy the following condition:

$$0 < (B1-B2)/B2 \leq 65\%.$$

optionally, $0\% \leq (B1-B2)B2 \leq 25\%$, and more optionally, $6\% \leq (B1-B2)/B2 \leq 15\%$.

In any embodiment of this application, A1 and A2 satisfy the following condition:

$$0 \leq |A2-A1|/A1 \leq 10\%,$$

optionally,

$$0 \leq |A2-A1|/A1 \leq 5\%.$$

In any embodiment of this application, A1 is 30 $\mu$m-300 $\mu$m, more optionally, A1 is 40 $\mu$m-160 $\mu$m. In any embodiment of this application, A2 is 30 $\mu$m-300 $\mu$m, more optionally, A2 is 40 $\mu$m-160 $\mu$m.

In any embodiment of this application, 12% $\leq$ (B1-A1)/A1 $\leq$ 70%, and 1 % $\leq$ (B2-A2)/A2 $\leq$ 40%;

optionally,

$$15\% \leq (B1-A1)/A1 \leq 40\%, \text{ and } 3\% \leq (B2-A2)/A2 \leq 20\%;$$

and
optionally,

$$18\% \leq (B1-A1)/A1 \leq 22\%, \text{ and } 6\% \leq (B2-A2)/A2 \leq 12\%.$$

In any embodiment of this application, A1, A2, B1, and B2 satisfy the following condition:

$$1 < (B1*A2)/(B2*A1) \leq 10,$$

optionally,

$$1.6 \leq (B1*A2)/(B2*A1) \leq 3.5.$$

In any embodiment of this application, in an extension direction from the edge coating region to the middle coating region, size of the edge coating region is D1, and size of the middle coating region is D2, where D1 and D2 satisfy the following condition:

$$0.05 \leq D2/(D2+D1) \leq 0.95,$$

optionally,

$$0.1 \leq D2/(D2+D1) \leq 0.4.$$

In any embodiment of this application, the edge coating region includes a first negative electrode active material, and the middle coating region includes a second negative electrode active material, where volume swelling rate of the first negative electrode active material is greater than volume swelling rate of the second negative electrode active material.

Optionally, mass percentage of the first negative electrode active material in the edge coating region is greater than or equal to mass percentage of the second negative electrode active material in the middle coating region; and optionally, types of negative electrode active materials in the middle coating region and the edge coating region are at least partially different.

In any embodiment of this application, the negative electrode active materials in the edge coating regions are both the first negative electrode active material.

Optionally, the middle coating region further includes a third negative electrode active material that is different from the second negative electrode active material in type, volume swelling rate of the third negative electrode active material being smaller than or equal to the volume swelling rate of the first negative electrode active material.

In any embodiment of this application, the negative electrode active material in the edge coating region is selected from at least one of artificial graphite, first natural graphite, and silicon-based material.

The negative electrode active material in the middle coating region is selected from at least one of second natural graphite, hard carbon, and soft carbon.

Volume swelling rate of the first natural graphite is greater than volume swelling rate of the second natural graphite.

In any embodiment of this application, orientation value of the first natural graphite is smaller than orientation value of the second natural graphite.

A second aspect of this application provides a secondary battery, including the negative electrode plate according to the first aspect of this application.

A third aspect of this application provides a battery module, including the secondary battery according to the second aspect of this application.

A fourth aspect of this application provides a battery pack including the battery module according to the third aspect of this application.

A fifth aspect of this application provides an electric apparatus, including at least one of the secondary battery according to the second aspect of this application, the battery module according to the third aspect of this application, and the battery pack according to the fourth aspect of this application.

## BRIEF DESCRIPTION OF DRAWINGS

To describe the technical solutions in this application more clearly, the following briefly describes the accompanying drawings used in this application. Apparently, the accompanying drawings in the following description show only some embodiments of this application, and persons of ordinary skill in the art may still derive other drawings from these accompanying drawings without creative efforts.

FIG. 1 is a schematic structural diagram of partition coating on a surface of a negative electrode plate according to an embodiment of this application.

FIG. 2 is a schematic structural diagram of partition coating on a surface of a negative electrode plate according to another embodiment of this application.

FIG. 3 is a schematic diagram of a secondary battery according to an embodiment.

FIG. 4 is an exploded view of FIG. 3.

FIG. 5 is a schematic diagram of a battery module according to an embodiment.

FIG. 6 is a schematic diagram of a battery pack according to an embodiment.

FIG. 7 is an exploded view of FIG. 6.

FIG. 8 is a schematic diagram of an electric apparatus using a secondary battery as a power source according to an embodiment.

Reference numerals in the accompanying drawings are described as follows:
1. battery pack; 2. upper box body; 3. lower box body; 4. battery module; 5. secondary battery; 51. housing; 52. electrode assembly; 53. cover plate; 6. electric apparatus; 7. negative electrode plate; 71. edge coating region; 72. middle coating region; and 73. blank region.

## DESCRIPTION OF EMBODIMENTS

The following further describes this application with reference to embodiments. It should be understood that these specific embodiments are merely intended to illustrate this application but not to limit the scope of this application.

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the descriptions of this specification, it should be noted that "more than" or "less than" is inclusive of the present number and that "more" in "one or more" means two or more than two, unless otherwise specified.

In the description of this specification, unless otherwise stated, a term "or (or)" indicates inclusion. That is, a phrase "A or (or) B" means "A, B, or both A and B". More specifically, any one of the following conditions satisfies the condition "A or B": A is true (or present) and B is false (or not present); A is false (or not present) and B is true (or present); or both A and B are true (or present). Unless otherwise specified, the terms used in this application have well known meanings commonly understood by persons skilled in the art. Unless otherwise specified, numerical values of parameters mentioned in this application may be measured by using various measurement methods commonly used in the art (for example, they may be tested by using the methods provided in the embodiments of this application).

**Secondary battery**

A secondary battery is a battery that can be charged after being discharged to activate active materials for continuous use.

Generally, a secondary battery includes a positive electrode plate, a negative electrode plate, a separator, and an electrolyte. In a charge and discharge process of the battery, active ions are intercalated and deintercalated between the positive electrode plate and the negative electrode plate. The separator is disposed between the positive electrode plate and the negative electrode plate to ensure separation. The electrolyte conducts ions between the positive electrode plate and the negative electrode plate.

[Negative electrode plate]

As mentioned in the background, to improve the safety performance and cycling performance of secondary batteries, an embodiment of this application provides a negative electrode plate. The negative electrode plate includes a negative electrode current collector and a negative electrode film layer disposed on at least one surface of the negative electrode current collector.

The negative electrode film layer includes a middle coating region and edge coating regions located on two opposite sides of the middle coating region.

Thickness of the edge coating region in a fully-discharged state is A1, and thickness of the edge coating region in a fully-charged state is B1.

Thickness of the middle coating region in the fully-discharged state is A2, and thickness of the middle coating region in the fully-charged state is B2.

A1, A2, B1, and B2 satisfy the following condition:

$$(B1-A1)/A1 > (B2-A2)/A2, \text{ and } B2 < B1.$$

It can be understood that (B1-A1)/A1 and (B2-A2)/A2 respectively represent thickness rebound rates of the edge coating region and the middle coating region in the fully-charged state with respect to the fully-discharged state. In other words, of the negative electrode film layer, the material in the edge coating region and the material in the middle coating region have different thickness rebound rates. Specifically, the thickness rebound rate of the material of the edge coating region is greater than the thickness rebound rate of the material in the middle coating region.

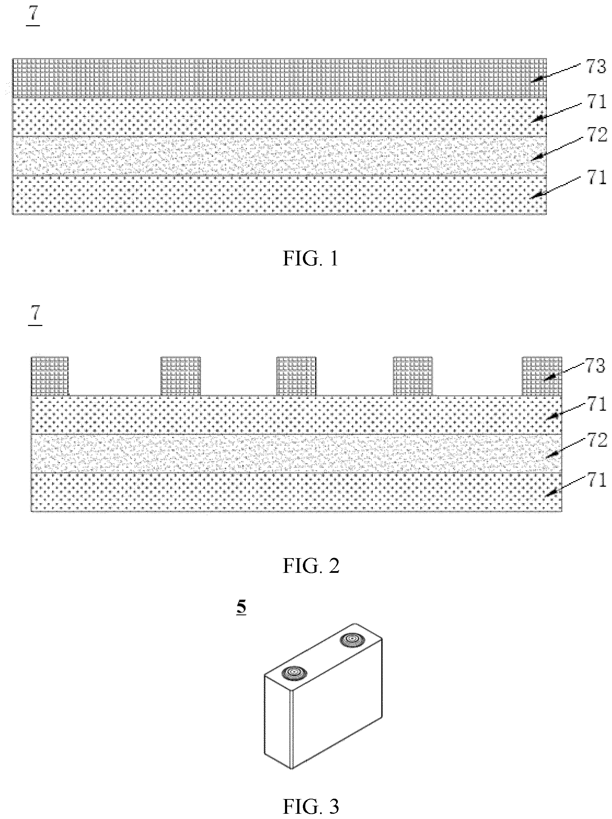

FIG. 1 is a schematic structural diagram of a negative electrode film layer on a surface of a negative electrode plate 7, including a middle coating region 72 in the middle region and edge coating regions 71 on two opposite sides of the middle coating region 72. Further, a blank region 73 without the negative electrode film layer is provided as a tab region on a side of one of the edge coating regions 71 away from the middle coating region 72. Specifically, the blank region 73 shown in FIG.1 is continuous and can be used to form a full tab.

Referring to FIG. 2, it can be learned from FIG. 2 that the negative electrode plate 7 in FIG. 2 is substantially the same as the negative electrode plate 7 in FIG. 1 in structure, only except that the blank region 73 is discontinuous and can be used to form cut tabs.

In specific examples shown in FIGs. 1 and 2, the contact surface between the middle coating region 72 and the edge coating region 71 is flat. It should be understood that in other embodiments, the contact surface may alternatively be inclined, curved, or the like.

Without intending to be bound by any theory, in this application, the middle coating region and edge coating regions with different thickness rebound rates are formed in different regions on the negative electrode current collector of the negative electrode plate, and specifically, thickness rebound rate of the edge coating region of the negative electrode film layer is greater than thickness rebound rate of the middle coating region. In addition, when the negative electrode plate is in the fully-charged state, the thickness B2 of the middle coating region is smaller than the thickness B1 of the edge coating region. In this way, in the fully-charged state, the electrolyte in the central region of the negative electrode plate is not completely extruded, and it is not difficult to absorb back the electrolyte into the middle region of the negative electrode plate after battery cell swelling. In addition, it is easy to absorb the electrolyte back into the middle due to the smaller thickness B2 of the middle coating region. Thus, the lithium precipitation problem caused by insufficient electrolyte and the lithium-ion diffusion difficulty in the middle region is solved, improving the safety performance and cycling performance of the secondary battery using the negative electrode plate.

In the negative electrode film layer of the foregoing negative electrode plate, the thickness rebound rate of the material of the edge coating region is greater than the thickness rebound rate of the material of the middle coating region. Therefore, the coating thicknesses of the edge coating region and the middle coating region can be controlled to be the same or similar at the coating stage to utilize the different thickness rebound rates of the edge coating region and the middle coating region to achieve that the thickness B2 of the middle coating region is smaller than the thickness B1 of the edge coating region when the negative electrode plate is in the fully-charged state.

However, in a method where materials with the same thickness rebound rate are used and the edge coating regions and middle coating region with different thicknesses are directly constructed, thicknesses of a plurality of regions need to be adjusted during coating, increasing the processing costs. In addition, during the preparation process of the negative electrode plate, such as the cold pressing, uneven coating thickness of the negative electrode film layer may lead to overpressure on some regions, causing an increase in extension of the negative electrode current collector, thus deteriorating the negative electrode plate. In such case, the middle portion is likely to collapse due to the initial uneven thickness of the electrode plate during the subsequent processing such as hot pressing, thus increasing the defect rate of the battery cell. In addition, the middle portion is prone to fracture in the cycling process of the battery, affecting processing performance.

In this application, the negative electrode plate can maintain uniform thickness during coating, reducing the processing costs and further avoiding the foregoing problem of the method in which the materials with the same thickness rebound rate are used and the edge coating regions and middle coating region with different thicknesses are directly constructed.

In any embodiment of this application, A1 and A2 satisfy the following condition: $0 \leq |A2-A1|/A1 \leq 10\%$. In other words, the thicknesses of the edge coating region and the middle coating region in the fully-discharged state are the same or slightly different. In this way, it is only necessary to control the coating thicknesses of the edge coating region and middle coating region to be the same or similar.

Optionally, $0 \leq |A2-A1|/A1 \leq 5\%$. Optionally, A2 is equal to A1.

In any embodiment of this application, A1 is 30 $\mu$m-300 $\mu$m, optionally, A2 is 30 $\mu$m-300 $\mu$m. Optionally, A1 is 40 $\mu$m-160 $\mu$m. Optionally, A2 is 40 $\mu$m-160 $\mu$m. In this way, the thicknesses of both the edge coating region and middle coating region in the fully-discharged state are within the given range, which is moderate and neither excessively thick nor excessively thin, facilitating the processing of the negative electrode plate.

In any embodiment of this application, B1 and B2 satisfy the following condition: $0 < (B1-B2)/B2 \leq 65\%$, optionally, $0\% \leq (B1-B2)B2 \leq 25\%$, and more optionally $6\% \leq (B1-B2)/B2 \leq 15\%$ or $10\% \leq (B1-B2)/B2 \leq 15\%$. Further, on a basis of controlling the thickness B2 of the middle coating region to be smaller than the thickness B1 of the edge coating region when the negative electrode plate is controlled to be in the fully-charged state, the difference between the thickness B2 of the middle coating region and the thickness B1 of the edge coating region is further limited, further promoting smooth absorption of the electrolyte into the middle region of the negative electrode plate when the negative electrode plate is in the fully-charged state, further alleviating the lithium precipitation problem caused by insufficient electrolyte and the difficult lithium-ion diffusion in the middle region.

In any embodiment of this application, $12\% \leq (B1-A1)/A1 \leq 70\%$, and $1\% \leq (B2-A2)/A2 \leq 40\%$.

An excessively large thickness rebound rate of the edge coating region makes it difficult to absorb the electrolyte back in the side region. This is not conducive to alleviating the precipitation problem and reduces the group margin during battery design, thereby hindering the increase in the overall energy density of the battery. The group margin refers to the ratio of the actual internal cross-sectional area of the battery to the maximum internal cross-sectional area. The thickness rebound rate of the middle coating region should not be set excessively small either, because an active substance material with a smaller thickness rebound rate tends to have lower capacity. Using such material is neither conducive to the increase in the energy density of the battery cell. In this way, on the basis of limiting $(B1-A1)/A1 > (B2-A2)/A2$, the range of the thickness rebound rates of the edge coating region and the middle coating region is further limited. This helps to improve the infiltration and retention capacity of the electrolyte in the middle region of the negative electrode plate, thereby ensuring the cycling performance and energy density of the battery.

Optionally, $12\% \leq (B1-A1)/A1 \leq 60\%$. Optionally, $15\% \leq (B1-A1)/A1 \leq 40\%$, and further optionally, $18\% \leq (B1-A1)/A1 \leq 22\%$.

Optionally, $3\% \leq (B2-A2)/A2 \leq 20\%$. Further optionally, $4\% \leq (B2-A2)/A2 \leq 12\%$. Still further optionally, $6\% \leq (B2-A2)/A2 \leq 12\%$.

It can be understood that $(B1-A1)/A1 > (B2-A2)/A2$, and $B1/A1-1 > B2/A2-1$. Thus, $B1/A1 > B2/A2$, and $(B1*A2)/(B2*A1) > 1$.

In any embodiment of this application, A1, A2, B1, and B2 satisfy the following condition: $1 \leq (B1*A2)/(B2*A1) \leq 10$. In this way, $(B1*A2)/(B2*A1)$ is further limited within the given range, which is equal to limiting the difference between the thickness rebound rates of the edge coating region and middle coating region. An excessively small difference between the thickness rebound rates leads to an insignificant effect of alleviating the problem of absorbing back the electrolyte. An excessively large difference between the thickness rebound rates leads to a relatively large thickness of the entire negative electrode plate, especially, the edge coating region in the fully-charged state. This reduces the group margin during the battery design and is not conducive to improve the energy density. Thus, limiting the difference between the thickness rebound rates of the edge coating region and middle coating region within the given range helps to improve the capability of the electrolyte infiltrating the negative electrode plate and ensures the energy density of the battery.

Optionally,

$$1.6 \leq (B1*A2)/(B2*A1) \leq 3.5.$$

In any embodiment of this application, in an extension direction from the edge coating region to the middle coating region, size of the edge coating region is D 1, and size of the middle coating region is D2, where D1 and D2 satisfy the following condition:

$$0.05 \leq D2/(D2+D1) \leq 0.95.$$

In this way, the relative sizes between the edge coating region and middle coating region are limited, thus limiting the relative areas between the edge coating region and middle coating region. Because the thickness rebound rate of the middle coating region is smaller than the thickness rebound rate of the edge coating region, the volume swelling rate of the material of the middle coating region is generally smaller than the volume swelling rate of the material of the edge coating region. In addition, the volume swelling rate of the material is positively correlated with its true density, the true density of the material of the middle coating region is smaller than the true density of the material of the edge coating region. True density is relative to the bulk density of a particle group and means the actual mass of solid material per unit volume in a completely dense state, that is, a density without internal pores or gaps between particles. Therefore, the middle coating layer made of materials with lower true density has more internal pores, thus significantly improving the capability of the electrolyte infiltrating the material. However, an excessively large width or area of the middle coating region leads to a significant increase in the electrolyte required by the entire battery, which reduces the energy density of the battery. An excessively small width or area of the middle coating region limits the area range of the improved region through electrolyte infiltration, and thus lithium precipitation may occur in a charge and discharge process because the electrolyte is unable to infiltrate the innermost region. Therefore, the relative sizes between the edge coating region and the middle coating region are comprehensively and preferably considered to be in the foregoing range, so as to meet all the requirements for the safety performance, cycling performance, and energy density of the battery.

Optionally,

$$0.1 \leq D2/(D2+D1) \leq 0.4.$$

The negative electrode current collector may be a common metal foil sheet or a composite current collector (for example, the composite current collector may be formed by providing a metal material on a polymer matrix). As an example, a copper foil may be used as the negative electrode current collector.

In any embodiment of this application, the negative electrode film layer includes a negative electrode active material, and the total mass percentages of negative electrode active materials in the middle coating region and edge coating region are equal.

In any embodiment of this application, types of negative electrode active materials in the middle coating region and the edge coating region are at least partially different, that is, may be completely different or partially different.

Further, the edge coating region includes a first negative electrode active material, and the middle coating region includes a second negative electrode active material, where volume swelling rate of the first negative electrode active material is greater than volume swelling rate of the second negative electrode active material. In this way, the thickness rebound rate of the edge coating region is greater than the thickness rebound rate of the middle coating region.

Optionally, mass percentage of the first negative electrode active material in the edge coating region is greater than or equal to mass percentage of the second negative electrode active material in the middle coating region.

In any embodiment of this application, the negative electrode active materials in the edge coating regions are both the first negative electrode active material.

Optionally, the negative electrode active materials in the middle coating regions are both the second negative electrode active material. In some other embodiments, optionally, the middle coating region further includes a third negative electrode active material that is different from the second negative electrode active material in type, volume swelling rate of the third negative electrode active material being smaller than or equal to the volume swelling rate of the first negative electrode active material.

The negative electrode active materials include at least one of hard carbon, soft carbon, artificial graphite, natural graphite, expanded graphite, silicon-based material, and lithium titanate material. The silicon-based material includes, but is not limited to, silicon particles, silicon dioxide, silicon carbide, and other materials.

The foregoing negative electrode active materials include commonly used active substances for the negative electrode of the secondary battery. The design of the negative electrode plate of the present invention is based on the type of the negative electrode active material, showing significant effects on these negative electrode active materials. Using preferred active substances makes it easier to achieve the desired technical effects.

In any embodiment of this application, the negative electrode active material in the edge coating region is selected from at least one of artificial graphite, first natural graphite, and silicon-based material, and these materials have a relatively large volume swelling rate. The negative electrode active material in the middle coating region is selected from at least one of second natural graphite, hard carbon, and soft carbon, and these materials have a relatively small volume swelling rate. Volume swelling rate of the first natural graphite is greater than volume swelling rate of the second natural graphite.

Further, orientation value of the first natural graphite is smaller than orientation value of the second natural graphite. A smaller orientation value of the natural graphite leads to a larger volume swelling rate.

In addition to the negative electrode active material, the negative electrode film layer generally further optionally includes a binder, a conductive agent, or other optional additives.

As an example, the conductive agent may be one or more of superconducting carbon, acetylene black, carbon black, Ketjen black, carbon dot, carbon nanotube, graphene, and carbon nanofiber.

As an example, the binder is one or more of styrene-butadiene rubber (SBR), water-based acrylic resin (water-based acrylic resin), polyvinylidene fluoride (PVDF), polytetrafluoroethylene (PTFE), ethylene vinyl acetate (EVA), polyvinyl alcohol (PVA), and polyvinyl butyral (PVB).

As an example, other optional additives may be a thickening and dispersing agent (for example, sodium carboxymethyl cellulose CMC-Na) or a PTC thermistor material.

This application further provides the preparation method of the foregoing negative electrode plate, including the following step:

forming the negative electrode film layer on at least one surface of the negative electrode current collector.

It can be understood that the negative electrode film layers on the middle coating region and edge coating region can be formed by partition coating on the negative electrode current collector. The coating methods include, but are not limited to, spraying, brushing, and other methods. The composition and thickness control of the slurries used for forming the negative electrode film layer on the middle coating region and edge coating region are described as above and not described again herein.

Unless otherwise specified, the foregoing materials can be commercially purchased.

[Positive electrode plate]

In a secondary battery, the positive electrode plate usually includes a positive electrode current collector and a positive electrode film layer provided on the positive electrode current collector, where the positive electrode film layer includes a positive electrode active material.

The positive electrode current collector may be a common metal foil sheet or a composite current collector (the composite current collector can be made by providing a metal material on a polymer matrix). As an example, an aluminum foil may be used as the positive electrode current collector.

A specific type of the positive electrode active material is not limited. An active material known in the art can be used as the positive electrode of the secondary battery, and those skilled in the art may select an active material based on actual needs.

As an example, the positive electrode active material may include, but is not limited to, at least one of lithium-ion positive electrode active material and sodium-ion positive electrode active material. As an example, the positive electrode active material includes, but is not limited to, one or more of lithium transition metal oxide, olivine-structured lithium-containing phosphate, and respective modified compounds thereof, layered sodium-containing oxide, sodium iron sulfate, and sodium-containing Prussian blue analogue material. Examples of the lithium transition metal oxide may include but are not limited to one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and their modified compounds. Examples of the olivine-structured lithium-containing phosphate may include, but are not limited to, one or more of lithium iron phosphate, composite materials of lithium iron phosphate and carbon, lithium manganese phosphate, composite materials of lithium manganese phosphate and carbon, lithium manganese iron phosphate, composite materials of lithium manganese iron phosphate and carbon, and modified compounds thereof. These materials are all commercially available.

In some embodiments, the modified compounds of the foregoing materials may be modified by doping and/or surface coating on the materials.

The positive electrode film layer generally optionally includes a binder, a conductive agent, or other optional additives.

As an example, the conductive agent may be one or more of superconducting carbon, acetylene black, carbon black, Ketjen black, carbon dot, carbon nanotube, Super P (SP), graphene, and carbon nanofiber.

In an example, the binder may be one or more of styrene-butadiene rubber (SBR), water-based acrylic resin (water-based acrylic resin), polyvinylidene fluoride (PVDF), polytetrafluoroethylene (PTFE), ethylene-vinyl acetate copolymer (EVA), polyacrylic acid (PAA), carboxymethyl cellulose (CMC), polyvinyl alcohol (PVA), and polyvinyl butyral (PVB).

[Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film and is not particularly limited. When the separator is a multi-layer composite film, all layers may be made of same or different materials, which is not particularly limited.

[Electrolyte]

A secondary battery may include an electrolyte, and the electrolyte migrates ions between a positive electrode and a negative electrode. The electrolyte may include an electrolytic salt and a solvent.

As an example, the electrolytic salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bistrifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate ($LiPO_2F_2$), lithium difluoro(dioxalato)phosphate (LiDFOP), and lithium tetrafluoro oxalato phosphate (LiTFOP).

In an example, the solvent may be selected from one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-gamma-butyrolactone (GBL), sulfolane (SF), methyl sulfonyl methane (MSM), ethyl methanesulfonate (EMS), and diethyl sulfone (ESE).

In some embodiments, the electrolyte further includes an additive. For example, the additive may include a negative electrode film-forming additive, or may include a positive electrode film-forming additive, or may include an additive capable of improving some performance of the battery, for example, an additive for improving overcharge performance of the battery, an additive for improving high-temperature performance of the battery, or an additive for improving low-temperature performance of the battery.

In some embodiments, the secondary battery in this application is a lithium-ion secondary battery or a sodium-ion secondary battery.

The secondary battery can be prepared using conventional method in the art. For example, the positive electrode plate, the separator, and the negative electrode plate are wound (or stacked) in sequence with the separator sandwiched between the positive electrode plate and the negative electrode plate to provide isolation, to obtain a battery cell. The battery cell is placed in an outer package. The electrolyte is injected, and sealing is performed to obtain the secondary battery.

The secondary battery is not particularly limited in shape in the embodiments of this application and may be cylindrical, rectangular, or of any other shapes. FIG. 3 shows a secondary battery 5 with a rectangular structure as an example.

In some embodiments, the secondary battery may include an outer package. The outer package is used to package a positive electrode plate, a negative electrode plate, and an electrolyte.

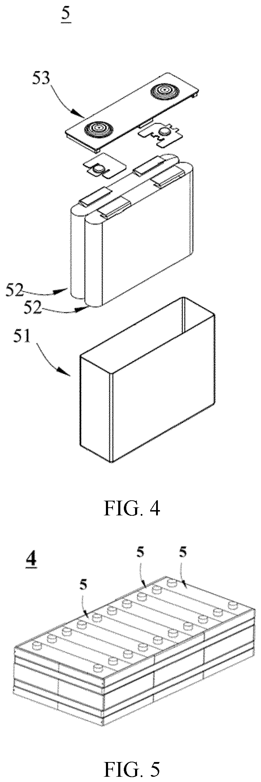

In some embodiments, referring to FIG. 4, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity.

The positive electrode plate, the negative electrode plate, and the separator may be made into an electrode assembly 52 through winding or lamination. The electrode assembly 52 is packaged into the accommodating cavity. Electrolyte infiltrates into the electrode assembly 52. There may be one or more electrode assemblies 52 in the secondary battery 5, and the quantity may be adjusted as required.

In some embodiments, the outer package of the secondary battery may be a hard shell, for example, a hard plastic shell, an aluminum shell, or a steel shell. The outer package of the secondary battery may alternatively be a soft package, for example, a soft pouch. A material of the soft pack may be plastic, for example, may include one or more of polypropylene (PP), polybutylene terephthalate (PBT), polybutylene succinate (PBS), and the like.

In some embodiments, secondary batteries may be assembled into a battery module, and a battery module may include a plurality of secondary batteries, the specific quantity of which may be adjusted based on use and capacity of the battery module.

FIG. 5 shows a battery module 4 as an example. In the battery module 4, a plurality of secondary batteries 5 may be sequentially arranged in a length direction of the battery module 4. Certainly, the batteries may alternatively be arranged in any other manners. Further, the plurality of secondary batteries 5 may be fastened through fasteners.

Optionally, the battery module 4 may further include a housing with accommodating space, and the plurality of secondary batteries 5 are accommodated in the accommodating space.

In some embodiments, the battery modules may be further assembled into a battery pack, and a quantity of battery modules included in the battery pack may be adjusted based on use and capacity of the battery pack.

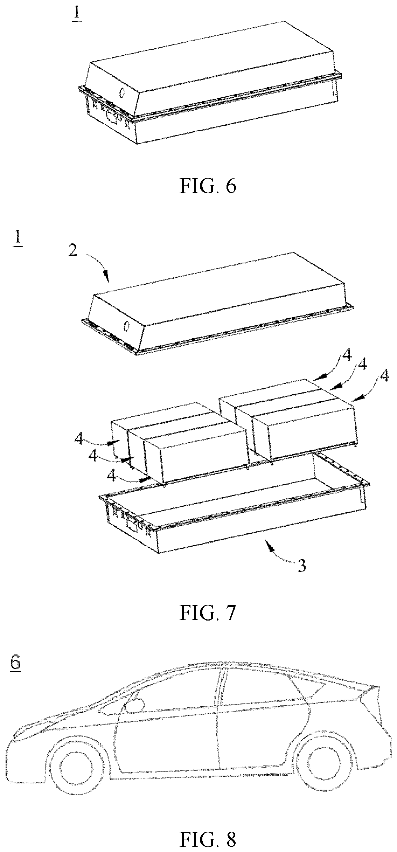

FIGs. 6 and 7 show a battery pack 1 as an example. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

[Electric apparatus]

This application further provides an electric apparatus. The electric apparatus includes at least one of the secondary battery, the battery module, or the battery pack. The secondary battery, the battery module, or the battery pack may be used as a power source of the apparatus, or an energy storage unit of the apparatus. The apparatus may be but is not limited to a mobile device (for example, a mobile phone or a laptop computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite, an energy storage system, and the like.

A secondary battery, a battery module, or a battery pack may be selected for the apparatus based on requirements for using the apparatus.

FIG. 8 shows an apparatus as an example. This electric apparatus 6 is a battery electric vehicle, a hybrid electric vehicle, a plug-in hybrid electric vehicle, or the like. To meet requirements of the apparatus for high power and high energy density of secondary batteries, a battery pack or a battery module may be used.

In another example, the apparatus may be a mobile phone, a tablet computer, a notebook computer, or the like. Such apparatus is generally required to be light and thin and may use a secondary battery as its power source.

The following further describes beneficial effects of this application with reference to examples.

**Examples**

To describe the technical problems solved by this application, technical solutions, and beneficial effects of this application more clearly, further description is made in detail with reference to the embodiments and accompanying drawings. Apparently, the described embodiments are merely some but not all of the embodiments of this application. The following description of at least one exemplary embodiment is merely illustrative and definitely is not construed as any limitation on this application or on use of this application. All other embodiments obtained by persons of ordinary skill in the art based on the embodiments of this application without creative efforts shall fall within the protection scope of this application.

The materials used in the examples of this application are all commercially available.

**I. Preparation of negative electrode plate**

Example 1:

95 wt% negative electrode active material 2 (see Table 1 for details), 1.74 wt% conductive carbon black (SP), 2.3 wt% styrene-butadiene rubber latex (SBR), and 0.96 wt% sodium carboxymethyl cellulose were mixed and dissolved in deionized water to form a slurry. The prepared slurry was then applied onto the middle position of both surfaces of a copper foil with a width of 206 mm and a thickness of 6 $\mu$m. This coating served as the middle coating region.

Then, 96.2 wt% negative electrode active material 1 (see Table 1 for details), 0.8 wt% conductive carbon black (SP), 1.8 wt% styrene-butadiene rubber latex (SBR), and 1.2 wt% sodium carboxymethyl cellulose were mixed to form a slurry. The prepared slurry was applied onto two sides of the middle coating region, to obtain two edge coating regions with the same surface area and shape.

The coated electrode plate was dried and cold-pressed and then cut into the negative electrode plate.

Examples 2 and 3 were substantially the same as example 1, except that compositions of the negative electrode active materials 2 were different, and thus B2 values were different (see Table 1).

Examples 4 and 5 were substantially the same as example 2, except that compositions of the negative electrode active materials 1 were different, and thus B1 values were different (see Table 1).

Examples 6 and 7 were substantially the same as example 2, except that width ratios of the middle coating regions were different (see table 1).

Examples 8 to 10 were substantially the same as example 2, except that thicknesses of A1s and A2s as well as the widths of the middle coating regions were different, as shown in FIG. 1.

Examples 11 was substantially the same as example 1, except that width ratios of the middle coating regions were different (see table 1).

Examples 12 and 13 were substantially the same as example 2, except that width ratios of the middle coating regions were different (see table 1).

Examples 14 to 18 were substantially the same as example 1 or 2, with the difference shown in FIG. 1.

Comparative example 1 was substantially the same as example 1, except that the negative electrode active material 2 was replaced by the negative electrode active material 1.

Comparative examples 2 and 3 were substantially the same as example 1, with the difference shown in FIG. 1.

Some parameters of the resulting negative electrode plates in various examples and comparative examples were shown in Table 1 below.

## II. Preparation of battery

1. Positive electrode plate: An active material $LiNi_{0.8}Co_{0.1}Mn_{0.1}O_2$, conductive carbon black (SP), and polyvinylidene fluoride (PVDF) were mixed at a mass ratio of 96.8:2.2:1 and then dissolved in N-methyl-2-pyrrolidone (NMP). The resulting positive electrode slurry was applied onto an aluminum foil with a width of 400 mm, followed by drying, cold-pressing, and cutting, to obtain the positive electrode plate.

(2) Separator: A polyethylene (PE) porous polymer film was used as a separator.

3. Negative electrode plate: The negative electrode plates prepared in the foregoing examples or comparative examples were used.

4. Electrolyte: Ethylene carbonate (EC), ethyl methyl carbonate (EMC), and diethyl carbonate (DEC) were mixed at a volume ratio of 3:6:1, and then fully dried lithium salt ($LiPF_6$) was dissolved in a mixed organic solvent based on a proportion of 1 mol/L, to obtain the required electrolyte.

5. Full-battery assembly: The foregoing positive electrode plate, separator, and negative electrode plate were stacked in order, so that the separator was placed between positive and negative electrodes for separation, and winding was performed to obtain a bare cell. Then, the bare cell is provided in an outer package aluminum shell, and the prepared electrolyte was injected into the dried battery after high-temperature drying, followed by processes including vacuum packaging, standing, formation, and shaping, to obtain a lithium-ion secondary cylindrical battery.

## III. Battery performance evaluation

The performance evaluation of examples and comparative examples was conducted using the following methods:

1. Cycling performance test

First charging and discharging was performed at a constant temperature of 25°C, and constant-current and constant-voltage charging (charging to a current of 0.05C) was performed at a charge current of 1.0C (that is, a current at which a theoretical capacity was completely discharged within 1 hour) until an upper-limit voltage reached 4.25 V After 5-minute standing, constant-current discharging was performed at a discharge current of 1.0C until a final voltage was 2.8 V, and a discharge capacity was recorded at the first cycle. Charging and discharging were then repeated continuously.

$$\text{Capacity retention rate of the } N^{th} \text{ cycle} = (\text{discharge capacity of the } N^{th}$$

$$\text{cycle/discharge capacity of the first cycle}) \times 100\%.$$

2. Thickness test

Test environment and test method: The negative electrode plate was placed in an environment with a humidity of 2%, its thickness was measured using a micrometer, data of 15 points were recorded, and the average thereof was calculated to obtain a corresponding thickness.

The test sample of 0% SOC thickness was the negative electrode plate obtained by disassembling the battery in a dry environment at 20°C with a humidity of 2% after the battery cell under test was discharged to zero state of charge (that is, the fully-discharged state, 0% SOC).

The test sample of 100% SOC thickness was the negative electrode plate obtained by disassembling the battery in a dry environment at 20°C with a humidity of 2% after the battery cell subjected to the corresponding number of cycles was charged to full state of charge (that is, the fully-charged state, 100% SOC).

3. Lithium precipitation level test.

The battery cell subjected to the corresponding number of cycles was charged to full state of charge (that is, the fully-charged state, 100% SOC), the battery was placed and disassembled in a dry environment at 20°C with a humidity of 2%, the negative electrode plate of the disassembled battery cell was unfolded for observing the lithium precipitation in the middle coating region, followed by shooting and recording.

Lithium precipitation levels were defined as follows:

Level 0: No visible lithium precipitation.

Level 1: Trace-amount lithium precipitation (lithium precipitation area less than 20% of the area of the middle coating region).

Level 2: Small-area lithium precipitation (lithium precipitation area between 20% and 40% of the area of the middle coating region).

Level 3: Large-area lithium precipitation (lithium precipitation area greater than 40% of the area of the middle coating region).

In Table 1, the negative electrode active material 1 was the negative electrode active material in the edge coating layer, and the negative electrode active material 2 was the negative electrode active material in the middle coating layer.

Graphite a was artificial graphite with an average particle size $D_v50$ of 14 $\mu$m, an orientation value (OI) of 20, and a gram capacity of 345 mAh/g.

Graphite b was artificial graphite with an average particle size $D_v50$ of 11 $\mu$m, an orientation value (OI) of 41, and a gram capacity of 350 mAh/g.

Graphite c was natural graphite with an average particle size $D_v50$ of 15 $\mu$m, an orientation value (OI) of 11, and a gram capacity of 350 mAh/g.

Graphite d was artificial graphite with an average particle size $D_v50$ of 8.9 $\mu$m, an orientation value (OI) of 55, and a gram capacity of 340 mAh/g.

Graphite e was artificial graphite with an average particle size $D_v50$ of 14.1 $\mu$m, an orientation value (OI) of 5, and a gram capacity of 355 mAh/g.

The hard carbon material had an average particle size $D_v50$ of 5 $\mu$m and a gram capacity of 320 mAh/g.

For example, the negative electrode active material 2 in example 2 included 80% hard carbon and 20% graphite d, which represented in the negative electrode active material in the middle coating layer, 80 wt% was hard carbon and 20 wt% was graphite d. By analog,

A1 and B1 respectively represented 0% SOC thickness and 100% SOC thickness of an edge coating layer;

A2 and B2 respectively represented 0% SOC thickness and 100% SOC thickness of a middle coating layer;

D1 and D2 respectively represented sizes of the edge coating region and the middle coating region in an extension direction from the edge coating region to the middle coating region; and

(D2/2D1+D2) represented the width ratio of the middle coating region.

4. Volumetric energy density: According to the commonly known definition in this industry, it can be obtained using the commonly known method in this industry. In this specification, the volumetric energy density of the battery cell was obtained using the volume of the battery cell to divide the product of platform potential and platform voltage of the battery cell. In Table 2, the volumetric energy density was a relative volumetric energy density, with the volumetric energy density of example 1 as the reference. The volumetric energy density of each example and comparative example was expressed as a ratio relative to the volumetric energy density of example 1.

**Table 1**

| Item | Negative electrode active material 1 | 0% SOC thickness (A1) | 100% SOC thickness (B1) | (B1-A1)/A1 | Negative electrode active material 2 | 0% SOC thickness (A2) | 100% SOC thickness (B2) | (B2-A2)/A2 | (B1-B2)/B2 | B1A2/B2A1 | (D2/2D1+D2) |
|---|---|---|---|---|---|---|---|---|---|---|---|
| Example 1 | Graphite a | 80 μm | 96 μm | 20% | Hard carbon | 80 μm | 84.8 μm | 6% | 13.2% | 3.33 | 0.2 |
| Example 2 | Graphite a | 80 μm | 96 μm | 20% | 80% hard carbon+20% graphite d | 80 μm | 87.2 μm | 9% | 10.1% | 2.22 | 0.2 |
| Example 3 | Graphite a | 80 μm | 96 μm | 20% | 60% hard carbon+40% graphite d | 80 μm | 89.6 μm | 12% | 7.1% | 1.67 | 0.2 |
| Example 4 | Graphite b | 80 μm | 94.4 μm | 18% | 80% hard carbon+20% graphite d | 80 μm | 87.2 μm | 9% | 8.3% | 2 | 0.2 |
| Example 5 | Graphite c | 80 μm | 97.6 μm | 22% | 80% hard carbon+20% graphite d | 80 μm | 87.2 μm | 9% | 12% | 2.44 | 0.2 |
| Example 6 | Graphite a | 80 μm | 96 μm | 20% | 80% hard carbon+20% natural graphite d | 80 μm | 87.2 μm | 9% | 10.1% | 2.22 | 0.1 |
| Example 7 | Graphite a | 80 μm | 96 μm | 20% | 80% hard carbon+20% graphite d | 80 μm | 87.2 μm | 9% | 10.1% | 2.22 | 0.3 |
| Example 8 | Graphite a | 40 μm | 48 μm | 20% | 80% hard carbon+20% graphite d | 40 μm | 43.6 μm | 9% | 10.1% | 2.22 | 0.4 |
| Example 9 | Graphite a | 120 μm | 144 μm | 20% | 80% hard carbon+20% graphite d | 120 μm | 130.8 μm | 9% | 10.1% | 2.22 | 0.3 |
| Example 10 | Graphite a | 160 μm | 192 μm | 20% | 80% hard carbon+20% graphite d | 160 μm | 174.4 μm | 9% | 10.1% | 2.22 | 0.3 |
| Example 11 | Graphite a | 80 μm | 96 μm | 20% | Hard carbon | 80 μm | 84.8 μm | 6% | 13.2% | 3.33 | 0.6 |

| Item | Negative electrode active material 1 | 0% SOC thickness (A1) | 100% SOC thickness (B1) | (B1-A1)/A1 | Negative electrode active material 2 | 0% SOC thickness (A2) | 100% SOC thickness (B2) | (B2-A2)/A2 | (B1-B2)/B2 | B1A2/B2A1 | (D2/2D1+D2) |
|---|---|---|---|---|---|---|---|---|---|---|---|
| Example 12 | Graphite a | 80 μm | 96 μm | 20% | 80% hard carbon+20% graphite d | 80 μm | 87.2 μm | 9% | 10.1% | 2.44 | 0.8 |
| Example 13 | Graphite a | 80 μm | 96 μm | 20% | 80% hard carbon+20% graphite d | 80 μm | 87.2 μm | 9% | 10.1% | 2.44 | 0.05 |
| Example 14 | Graphite e | 80 μm | 104 μm | 30% | Hard carbon | 80 μm | 84.8 μm | 6% | 22.6% | 5 | 0.2 |
| Example 15 | 90% graphite e+10% hard carbon | 80 μm | 102 μm | 28% | Hard carbon | 80 μm | 84.8 μm | 6% | 20.3% | 4.67 | 0.2 |
| Example 16 | Graphite a | 80 μm | 96 μm | 20% | Hard carbon | 85 μm | 90.1 μm | 6% | 6.55% | 3.33 | 0.2 |
| Example 17 | 80% graphite a+20% silicon dioxide | 80 μm | 136 μm | 60% | Hard carbon | 80 μm | 84.8 μm | 6% | 60.4% | 10 | 0.2 |
| Example 18 | Graphite a | 80 μm | 96 μm | 20% | 80% hard carbon+20% graphite d | 80 μm | 87.2 μm | 9% | 10.1% | 2.22 | 0.95 |
| Comparative example 1 | Graphite a | 80 μm | 96 μm | 20% | Graphite a | 80 μm | 96 μm | 20% | 0 | 1 | 0.2 |
| Comparative example 2 | Hard carbon | 80 μm | 84.8 μm | 6% | Graphite a | 80 μm | 96 μm | 20% | -13.20% | 0.3 | 0.2 |
| Comparative example 3 | 80% graphite a+20% silicon dioxide | 80 μm | 136 μm | 60% | Graphite a+20% silicon dioxide | 80 μm | 136 μm | 60% | 0 | 1 | 0.2 |

EP 4 322 244 A1

14

**Table 2**

| Item | Capacity retention rate after 200 cycles (%) | Capacity retention rate after 600 cycles (%) | Lithium precipitation level after 200 cycles | Lithium precipitation level after 600 cycles | Relative volumetric energy density (relative to example 1) |
|---|---|---|---|---|---|
| Example 1 | 94.4 | 91.2 | 0 | 0 | 1.000 |
| Example 2 | 95.6 | 93.3 | 0 | 0 | 1.003 |
| Example 3 | 93.7 | 91.1 | 0 | 0 | 1.005 |
| Example 4 | 92.4 | 90.3 | 0 | 0 | 1.007 |
| Example 5 | 94.2 | 92.7 | 0 | 0 | 1.008 |
| Example 6 | 93.9 | 90.8 | 0 | 0 | 1.009 |
| Example 7 | 94.2 | 91.5 | 0 | 0 | 0.998 |
| Example 8 | 93.1 | 90.9 | 0 | 0 | 0.995 |
| Example 9 | 91.8 | 89.6 | 0 | 0 | 1.003 |
| Example 10 | 92.3 | 90.2 | 0 | 0 | 1.009 |
| Example 11 | 88.5 | 84.2 | 1 | 1 | 0.989 |
| Example 12 | 87.4 | 85.3 | 0 | 1 | 0.985 |
| Example 13 | 86.7 | 83.6 | 1 | 2 | 1.011 |
| Example 14 | 89.9 | 86.8 | 0 | 0 | 1.007 |
| Example 15 | 88.3 | 87.1 | 0 | 0 | 1.006 |
| Example 16 | 93.3 | 91.7 | 0 | 0 | 1.003 |
| Example 17 | 87.9 | 82.8 | 0 | 0 | 1.02 |
| Example 18 | 89.2 | 86.1 | 0 | 0 | 0.982 |
| Comparative example 1 | 82.1 | 78.2 | 2 | 3 | 1.009 |
| Comparative example 2 | 83.3 | 78.5 | 1 | 2 | 0.993 |
| Comparative example 3 | 87.6 | 75.8 | 0 | 3 | 1.03 |

It can be learned from Tables 1 and 2 that compared with comparative examples 1 to 3 in which (B1-A1)/A1≤(B2-A2)/A2 is controlled, the examples, in which (B1-A1)/A1>(B2-A2)/A2 and B2<B1 are controlled, show that the cycling performance is improved and the lithium precipitation problem is greatly alleviated under a condition that the volumetric energy density is maintained basically.

Examples 2 and 3 are substantially the same as example 1, except for different compositions of the negative electrode active materials 2, resulting in different B2 values, and thus different values of (B2-A2)/A2 and (B 1-B2)B2. Under a condition that the volumetric energy densities and the lithium precipitation levels are approximately equal, respectively, examples 1 and 2 show superior cycling performance.

Examples 4 and 5 are substantially the same as example 2, except for different compositions of the negative electrode active materials 1, resulting in different B1 values, and thus different values of (B1-A1)/A1 and (B1-B2)/B2. Under the condition that the volumetric energy densities and the lithium precipitation levels are approximately equal, respectively, examples 2 and 5 show superior cycling performance.

Examples 6 and 7, 12 and 13, and 18 are substantially the same as example 2, except that width ratios of the middle coating regions are different. Examples 8 to 10 are substantially the same as example 2, except for thickness A1, thickness A2 as well as the width of the middle coating region. Examples 11 is substantially the same as example 1, except that width ratios of the middle coating regions are different. Under the condition that the volumetric energy densities and the lithium precipitation levels are approximately equal, respectively, compared with examples 11 to 13 and 18, examples 2 and 6 to 10 show superior cycling performance. That is, preferably, 0.1≤D2/(D2+D1)≤0.4.

Examples 14 and 15 as well as 17 are substantially the same as example 1, except for different compositions of the negative electrode active materials 1, resulting in different B1 values, and thus different values of (B1-A1)/A1 and (B1-B2)/B2. Under the condition that the volumetric energy densities and the lithium precipitation levels are approximately equal, respectively, example 1 shows superior cycling performance.

Example 16 is substantially the same as example 1, except only for different values of (B1-B2)B2. Under the condition that the volumetric energy densities and the lithium precipitation levels in examples 1 and 16 are approximately equal, respectively, both exhibit good cycling performances.

The foregoing descriptions are merely specific embodiments of this application, but are not intended to limit the protection scope of this application. Any equivalent modifications or replacements readily figured out by persons skilled in the art within the technical scope disclosed in this application shall fall within the claimed scope of this application. Therefore, the protection scope of this application shall be subject to the protection scope of the claims.

**Claims**

1. A negative electrode plate, comprising:

   a negative electrode current collector; and
   a negative electrode film layer located on at least one surface of the negative electrode current collector, wherein the negative electrode film layer comprises a middle coating region and edge coating regions located on two opposite sides of the middle coating region, wherein thickness of the edge coating region in a fully-discharged state is A1, thickness of the edge coating region in a fully-charged state is B1, thickness of the middle coating region in the fully-discharged state is A2, and thickness of the middle coating region in the fully-charged state is B2, wherein A1, A2, B1, and B2 satisfy the following condition:

$$(B1-A1)/A1>(B2-A2)/A2, \text{ and } B2<B1.$$

2. The negative electrode plate according to claim 1, wherein B1 and B2 satisfy the following condition:

$$0<(B1-B2)/B2\leq65\%, \text{ optionally, } 0\%\leq(B1-B2)/B2\leq25\%, \text{ and more optionally,}$$

$$6\%\leq(B1-B2)/B2\leq15\%.$$

3. The negative electrode plate according to claim 1 or 2, wherein A1 and A2 satisfy the following condition:

$$0\leq|A2-A1|/A1\leq10\%,$$

optionally,

$$0\leq|A2-A1|/A1\leq5\%.$$

4. The negative electrode plate according to claim 3, wherein A1 is 30 μm-300 μm, more optionally, A1 is 40 μm-160 μm.

5. The negative electrode plate according to claim 3, wherein A2 is 30 μm-300 μm, more optionally, A2 is 40 μm-160 μm.

6. The negative electrode plate according to any one of claims 1 to 5, wherein 12%≤(B1-A1)/A1≤70%, and 1%≤(B2-A2)/A2≤40%;

   optionally,

$$15\% \leq (B1-A1)/A1 \leq 40\%, \text{ and } 3\% \leq (B2-A2)/A2 \leq 20\%;$$

and
optionally,

$$18\% \leq (B1-A1)/A1 \leq 22\%, \text{ and } 6\% \leq (B2-A2)/A2 \leq 12\%.$$

7. The negative electrode plate according to any one of claims 1 to 6, wherein A1, A2, B1, and B2 satisfy the following condition:

$$1.0 < (B1*A2)/(B2*A1) \leq 10,$$

more optionally,

$$1.6 \leq (B1*A2)/(B2*A1) \leq 3.5.$$

8. The negative electrode plate according to any one of claims 1 to 7, wherein in an extension direction from the edge coating region to the middle coating region, size of the edge coating region is D1, and size of the middle coating region is D2, wherein D1 and D2 satisfy the following condition:

$$0.05 \leq D2/(D2+D1) \leq 0.95, \text{ optionally, } 0.1 \leq D2/(D2+D1) \leq 0.4.$$

9. The negative electrode plate according to any one of claims 1 to 8, wherein the edge coating region comprises a first negative electrode active material, and the middle coating region comprises a second negative electrode active material, wherein

   volume swelling rate of the first negative electrode active material is greater than volume swelling rate of the second negative electrode active material;
   optionally, mass percentage of the first negative electrode active material in the edge coating region is greater than or equal to mass percentage of the second negative electrode active material in the middle coating region; and
   optionally, types of negative electrode active materials in the middle coating region and the edge coating region are at least partially different.

10. The negative electrode plate according to claim 9, wherein the negative electrode active materials in the edge coating regions are both the first negative electrode active material; and
    optionally, the middle coating region further comprises a third negative electrode active material that is different from the second negative electrode active material in type, volume swelling rate of the third negative electrode active material being smaller than or equal to the volume swelling rate of the first negative electrode active material.

11. The negative electrode plate according to any one of claims 1 to 10, wherein the negative electrode active material in the edge coating region is selected from at least one of artificial graphite, first natural graphite, and silicon-based material; and

    the negative electrode active material in the middle coating region is selected from at least one of second natural graphite, hard carbon, and soft carbon;
    wherein volume swelling rate of the first natural graphite is greater than volume swelling rate of the second natural graphite.

12. The negative electrode plate according to claim 11, wherein orientation value of the first natural graphite is smaller than orientation value of the second natural graphite.

13. A secondary battery, comprising the negative electrode plate according to any one of claims 1 to 10.

**14.** A battery module, **characterized by** comprising the secondary battery according to claim 13.

**15.** A battery pack, **characterized by** comprising the battery module according to claim 14.

**16.** An electric apparatus, **characterized by** comprising at least one of the secondary battery according to claim 13, the battery module according to claim 14, and the battery pack according to claim 15.

7

FIG. 1

7

FIG. 2

5

FIG. 3

5

53

52

52

51

FIG. 4

4

5

5

5

5

FIG. 5

1

FIG. 6

1

2

4 4

4

4

4

4

4

3

FIG. 7

6

FIG. 8

## INTERNATIONAL SEARCH REPORT

| International application No. |
| --- |
| **PCT/CN2022/101433** |

**A. CLASSIFICATION OF SUBJECT MATTER**

H01M4/13(2010.01)i;H01M10/0566(2010.01)i

According to International Patent Classification (IPC) or to both national classification and IPC

**B. FIELDS SEARCHED**

Minimum documentation searched (classification system followed by classification symbols)

IPC: H01M

Documentation searched other than minimum documentation to the extent that such documents are included in the fields searched

Electronic data base consulted during the international search (name of data base and, where practicable, search terms used)

CNABS; CNTXT; VEN; WOTXT; USTXT; EPTXT; CNKI: 负极, 阳极, 边缘, 端部, 厚度, 膨胀, 满充, 荷电状态, negative electrode, anode, edge, end, thickness, expansion, full charge, state of charge, SOC

**C. DOCUMENTS CONSIDERED TO BE RELEVANT**

| Category* | Citation of document, with indication, where appropriate, of the relevant passages | Relevant to claim No. |
| --- | --- | --- |
| X | CN 113889678 A (TOYOTA MOTOR CORPORATION) 04 January 2022 (2022-01-04) description, paragraphs 7-142, and figures 1-8 | 1-16 |
| X | JP 2018106903 A (TOYOTA MOTOR CORP.) 05 July 2018 (2018-07-05) description, paragraphs 2 and 6-32, and figures 1-3 | 1-16 |
| X | JP 2020145064 A (SOKEN INC et al.) 10 September 2020 (2020-09-10) description, paragraphs 4-55, and figures 1-5 | 1-16 |
| A | CN 108933276 A (SK INNOVATION CO., LTD.) 04 December 2018 (2018-12-04) entire document | 1-16 |
| A | CN 109841794 A (NINGDE AMPEREX TECHNOLOGY LTD.) 04 June 2019 (2019-06-04) entire document | 1-16 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **24 March 2023** | **27 March 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/101433**

| Patent document cited in search report | | | Publication date (day/month/year) | Patent family member(s) | | | Publication date (day/month/year) |
|---|---|---|---|---|---|---|---|
| CN | 113889678 | A | 04 January 2022 | JP | 2022012289 | A | 17 January 2022 |
| | | | | KR | 20220003448 | A | 10 January 2022 |
| | | | | US | 2022006128 | A1 | 06 January 2022 |
| JP | 2018106903 | A | 05 July 2018 | None | | | |
| JP | 2020145064 | A | 10 September 2020 | JP | 7125235 | B2 | 24 August 2022 |
| CN | 108933276 | A | 04 December 2018 | KR | 20180130182 | A | 07 December 2018 |
| | | | | KR | 20210145100 | A | 01 December 2021 |
| | | | | US | 2021384546 | A1 | 09 December 2021 |
| | | | | KR | 20220132483 | A | 30 September 2022 |
| | | | | US | 2018342755 | A1 | 29 November 2018 |
| | | | | US | 11145888 | B2 | 12 October 2021 |
| CN | 109841794 | A | 04 June 2019 | US | 2020313176 | A1 | 01 October 2020 |
| | | | | CN | 109841794 | B | 20 July 2021 |

Form PCT/ISA/210 (patent family annex) (July 2022)

23